# EUROPEAN PATENT SPECIFICATION

(11) **EP 0 853 717 B1**
(45) Date of publication and mention of the grant of the patent: **09.10.2002**
(21) Application number: 97934512.1
(22) Date of filing: 22.07.1997
(51) Int. Cl.: F01M 1/16, F16K 17/04

(54) **DEVICE FOR LIMITING THE OIL PRESSURE IN THE LUBRICATING OIL CIRCUIT OF AN INTERNAL COMBUSTION ENGINE**
DRUCKBEGRENZUNGSVORRICHTUNG IN EINEM SCHMIERÖLKREISLAUF EINER BRENNKRAFTMASCHINE
DISPOSITIF LIMITANT LA PRESSION D'HUILE DANS LE CIRCUIT D'HUILE DE LUBRIFICATION D'UN MOTEUR A COMBUSTION INTERNE

(30) Priority: 02.08.1996 DE 19631296
(43) Date of publication of application: 22.07.1998
(73) Proprietor: Ford Global Technologies, Inc., Dearborn, Michigan 48126 (US)
(72) Inventor: TRZOSKA, Peter, Reinhold, D-50858 Köln (DE)
(74) Representative: Bonsmann, Manfred, Dipl.-Ing.
(86) International application number: EP9703942
(87) International publication number: WO98005851

(56) References cited:
- DE-A- 2 542 042
- JP-A- 8 158 839
- PATENT ABSTRACTS OF JAPAN vol. 017, no. 633 (M-1513), 24 November 1993 & JP 05 195742 A (NISSAN MOTOR CO LTD), 3 August 1993,
- PATENT ABSTRACTS OF JAPAN vol. 006, no. 050 (M-120), 3 April 1982 & JP 56 165711 A (MAZDA MOTOR CORP), 19 December 1981,

## Description

### FIELD OF THE INVENTION

The invention relates to a device according to the preamble of claim 1 for limiting the oil pressure in the lubricating oil circuit of an internal combustion engine, comprising an oil pump and a pressure relief valve for unblocking an opening to form a connection between the pressure side and the suction side of the oil pump or between the pressure side of the oil pump and a sump, which includes a blocking member movable against a biasing force in a valve housing to unblock the opening.

### BACKGROUND OF THE INVENTION AND PRIOR ART

In order to avoid overloading and malfunctioning of components of the internal combustion engine and to keep down the delivery power of the oil pump, it is necessary to limit the maximum oil pressure. For this purpose it is known to use expensive pressure regulated oil pumps or even oil pumps which are provided with two individual pumps one of which is switched off in the upper engine speed region.

The publication EP 0 624 719 A1 discloses a pressure relief valve of the kind described above which at a predetermined pressure unblocks an opening through which the excess oil flows from the pressure side of the pump either to the suction side or to the oil sump. Although such pressure relief valves are often used, they cannot completely meet the requirements placed on the oil pressure.

Patent Abstracts of Japan vol. 017, no. 633 (M-1513), 24 November 1993 & JP 05 195742 A discloses a pressure relief valve with two differently sized openings in the cylinder wall of the valve and one hole in a hollow piston that is movable against a spring force. Depending on the oil pressure at a given instant, there is a mutal overlap between one or the other of the two holes in the cylinder wall and the hole in the piston.

The Abstract of JP 8158839 A discloses a pressure relief valve in an lubricating system of an internal combustion engine that has two differently sized openings in the valve housing controlled sequentially to be open by a cylinder when the oil pressure rises.

DE 25 42 042 A1 discloses a pressure relief valve where the shape of the opening in the valve housing controls the pressure characteristic of the valve.

When idling, an internal combustion engine requires a minimum oil pressure in order to ensure lubrication of engine components such as, for example, the hydraulic plungers. Furthermore, at the maximum engine speed an internal combustion engine requires a minimum oil pressure in order ensure an adequate oil supply to the connecting rod bearings. When a conventional pressure relief valve of the kind described above is used to limit the pressure the oil pressure is unnecessarily high over a wide range of engine speeds.

### OBJECT OF THE INVENTION

The object of the invention is to provide an improved and more robust pressure relief valve of the kind mentioned above with which a better adaptation to the oil pressure requirements of the internal combustion engine is possible.

### SUMMARY OF THE INVENTION

To this end, the opening of the pressure relief valve according to claim 1 is divided into at least two partial openings spaced apart from one another in the direction of movement of the blocking member.

An advantage of this is that in the case of an increase in engine speed and an associated increase in oil pressure the two partial openings are unblocked in succession, namely at a first (lower) oil pressure value the first opening is unblocked and at a higher pressure the next opening is unblocked. When two partial openings are provided, the pressure relief valve thus operates in two stages, thereby giving a better adaptation to the pressure requirements of the engine oil than in the case of a pressure relief valve of the known design with only a single stage. In the lower and upper engine speed regions there is, in contrast to the conventional pressure relief valves, no difference in oil pressure, since the minimum requirements on the engine oil pressure in these regions are met in the same manner. In the middle engine speed range, however, the oil pressure can be markedly reduced by the use of the pressure relief valve made in accordance with the invention. Since over a wide range of engine speeds, both with cold and with hot oil, the oil pump pressure and consequently the oil pump delivery power can be markedly reduced, this leads at little expense to a reduction in the fuel consumption of the internal combustion engine.

In a further embodiment of the invention the partial openings are of different sizes, with a main opening being preceded by a smaller first opening, so that at a predetermined oil pressure first of all the first opening is unblocked and at a predetermined higher oil pressure the main opening is also unblocked.

According to yet another embodiment of the invention the shape and/or distance apart of the partial openings may be different. A greater distance between the partial openings results in the first stage setting in at a lower oil pressure than when the distance apart is smaller.

The larger the first opening is made, the greater is the engine speed region in which the first (low) pressure step is available. When it is shown graphically in a diagram in which the oil pressure is plotted as ordinate and the engine speed as abscissa the gradient of the first pressure step is flatter in the case of an opening which, regarded in the direction of movement of the blocking member, is short but wide, than in the case of a long and narrow first opening.

Thus through the selection of the size, the shape and the distance apart of the partial openings influence can be exerted on the oil pressure, particularly in the middle range of engine speed. The first opening may for example take the form of a slit-shaped opening, a bore, a triangular opening, or an oval opening.

Both openings may be located in the blocking member. The openings are then respectively unblocked on reaching the edge of a groove (a so-called undercut) running round the inside of the housing . Finally, one partial opening could be located in the valve housing and a further opening in the blocking member.

### BRIEF DESCRIPTION OF THE DRAWINGS

The invention will now be described in more detail, by way of example, with reference to the embodiments shown schematically in the drawing, in which:
- Fig. 1: shows a diagrammatic longitudinal section through a first embodiment of a two-stage pressure relief valve according to the state of the art;
- Fig. 2: shows a diagrammatic longitudinal cross section through one embodiment of a two-stage pressure relief valve in accordance with the invention; and
- Fig. 3: shows a diagrammatic longitudinal cross-section through another embodiment of a two-stage pressure relief valve in accordance with the invention.

### DETAILED DESCRIPTION OF PREFERRED EMBODIMENTS OF THE INVENTION

A known pressure relief valve indicated generally by 1 has in a housing 2 a piston 3 which is movable in a cylinder bore 5 in the direction of the arrow A against the preload of a pressure spring 4. The spring 4 is retained by a plug 6. A pressure duct 7 connected to the pressure side of an oil pump (not shown) leads to the side of the piston 3 remote from the pressure spring 4. The suction side of the oil pump is indicated by 8. In the side of the cylinder bore two partial openings are provided, namely a first opening 9 and a main opening 10. The two partial openings 9 and 10 are spaced apart from one another by a distance B, so that when the oil pressure on the pressure side of the piston 3 increases, resulting in a movement of the piston in the direction of the arrow A, first of all the first opening 9 is unblocked and then, on a further increase in pressure, the main opening 10 is unblocked. As will at once be clear, after the unblocking of the first partial opening 9 part of the pressure oil can flow out through the opening 9 to the suction side 8 of the oil pump, so that excess oil flows from the pressure side to the suction side of the oil pump. In an internal combustion engine having a lubricating oil circuit with an oil pump and such a pressure relief valve, this results in a fall in the oil pressure in the middle speed range compared with the use of a single-stage pressure relief valve. Both the oil pump pressure and the reduced pressure on the suction side of the oil pump are markedly lower in the middle engine speed range than in the case of single-stage pressure relief valves. The second stage is unblocked by reaching the main opening 10 when a predetermined higher oil pressure is reached. A vent bore is indicated by the numeral 11.

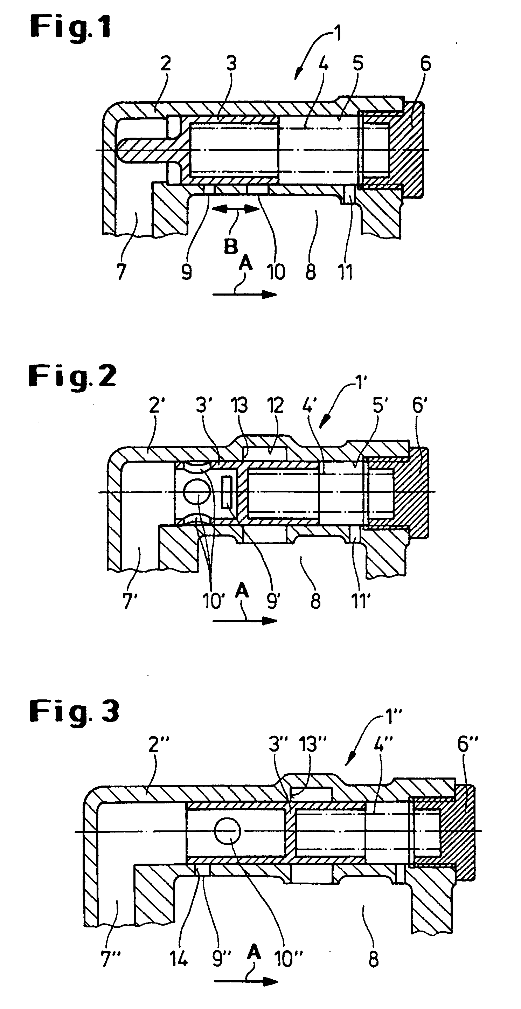

In Figures 2 and 3 the parts corresponding to those in Fig. 1 are indicated by the superscripts ' and '' respectively. A pressure relief valve 1' has a housing 2' and a blocking element in the form of a piston 3', which is arranged to move in a cylinder bore 5' against the spring loading of a spring 4'. A duct connected to the pressure side of an oil pump (not shown) is indicated by 7'. A plug carries the reference numeral 6' and a vent bore the reference numeral 8'.

While in the embodiment shown in Fig. 1 the two partial openings 9 and 10 are located in the valve housing 2, in the pressure relief valve shown in Fig. 2 the two partial openings, here numbered 9' and 10', are located in the piston forming the blocking member 3'. The first opening 9' is angular, shaped as a slit, and may be sub-divided into a plurality of smaller openings distributed round the circumference of the piston. Spaced therefrom (regarded counter to the direction of movement A of the blocking element 3'), is the rounded main opening 10', which may, as shown, likewise be subdivided into a plurality of individual main openings 10' distributed round the circumference. A groove 12 running round the inside of the valve housing 3' opens in the vicinity of the suction side of the oil pump.
When the piston 3' moves in the direction of the arrow A under the influence of the oil pressure prevailing in the duct 7, the openings 9' and 10' are successively unblocked as the openings reach the edge 13 of the groove 12. A vent bore is here designated 11'.

In the further embodiment shown in Fig. 3 a partial opening forming a first opening is designated 9''. The first opening 9'' is located in the valve housing 2''. A second partial opening forming the main opening is designated 10'' and is provided in the piston 3'' forming the blocking member. On movement of the piston 3' in the direction of the arrow A the first opening 9'' is unblocked as soon as the rear end face 14 of the piston 3'' reaches the vicinity of the partial opening 9''. The main opening 10'' is unblocked by passing the edge 13'' of the groove 12''.

## Claims

1. A device for limiting the oil pressure in the lubricating oil circuit of an internal combustion engine, comprising an oil pump and a pressure relief valve for unblocking an opening to form a connection between the pressure side and the suction side of the oil pump or the pressure side of the oil pump and a sump, which valve includes a blocking member movable against a biasing force in a valve housing to unblock the opening, the opening of the pressure relief valve (1'; 1'') being divided into at least two partial openings (9', 10'; 9'', 10'') apart from one another in the direction of movement of the blocking member by a distance (B), the at least two partial openings being unblocked in succession at respective predetermined oil pressures and remaining unblocked as long as the respective predetermined oil pressures are exceeded,
**characterised in that** at least one of the partial openings (9', 10'; 10'') is provided in the blocking member (3'; 3'') and that it is unblocked when reaching the edge (13; 13'') of a groove (12) running around the inside of the valve housing (2'; 2'').

2. A device according to claim 1, **characterised in that** the partial openings are of different sizes, with a main opening (10', 10'') being preceded by a smaller first opening (9', 9''), so that at a predetermined oil pressure first of all the first opening is unblocked and at a predetermined higher oil pressure the main opening is also unblocked.

3. A device according to claim 1 or claim 2, **characterised in that** the partial openings (9', 10''; and 9'', 10'' respectively) are of different shapes.

4. A device as claimed in any of claims 1 to 3, **characterised in that** the partial openings (9', 10') are provided in the blocking member (3').

5. A device as claimed in any of claims 1 to 3, **characterised in that** the partial openings (9'', 10'') are respectively formed in the valve housing (2'') and in the blocking member (3'').

## Patentansprüche

1. Vorrichtung zur Begrenzung des Öldrucks in dem Schmierölkreislauf einer Verbrennungskraftmaschine, mit einer Ölpumpe und mit einem zur Freigabe eines Öffnungsquerschnittes zur Herstellung einer Verbindung zwischen der Druckseite und der Saugseite der Ölpumpe oder der Druckseite der Ölpumpe und einer Ölwanne vorgesehenen Überdruckventil, welches ein in einem Ventilgehäuse entgegen einer Vorspannkraft bewegbares, den Öffnungsquerschnitt freigebendes Absperrorgan aufweist, wobei der Öffnungsquerschnitt des Überdruckventils (1', 1'') in wenigstens zwei in Bewegungsrichtung des Absperrorgans in einem Abstand (B) zueinander angeordnete Teilöffnungsquerschnitte (9', 10', 9'', 10'') unterteilt ist, wobei die wenigstens zwei Teilöffnungsquerschnitte nacheinander bei entsprechenden bestimmten Öldrücken freigegeben werden und freigegeben bleiben, solange die entsprechenden bestimmten Öldrücke überschritten werden,
**dadurch gekennzeichnet, dass** wenigstens einer der Teilöffnungsquerschnitte (9', 10'; 9'', 10'') im Absperrorgan (3', 3'') vorgesehen ist, und dass er freigegeben wird, wenn er die Kante (13; 13'') einer Nut (12) erreicht, die an der Innenseite des Ventilgehäuses (2', 2'') umläuft.

2. Vorrichtung nach Anspruch 1, **dadurch gekennzeichnet, daß** die Teilöffnungsquerschnitte unterschiedlich groß ausgebildet sind, und daß einem Hauptöffnungsquerschnitt (10', 10'') ein kleinerer erster Öffnungsquerschnitt (9', 9'') vorgeschaltet ist, derart, daß bei einem bestimmten Öldruck zunächst der erste Öffnungsquerschnitt freigegeben wird und daß bei einem bestimmten höheren Öldruck zusätzlich der Hauptöffnungsquerschnitt freigegeben wird.

3. Vorrichtung nach Anspruch 1 oder 2, **dadurch gekennzeichnet, daß** die Teilöffnungsquerschnitte (9', 10' bzw. 9'', 10'') unterschiedliche Formen aufweisen.

4. Vorrichtung nach einem der Ansprüche 1 bis 3, **dadurch gekennzeichnet, daß** die Teilöffnungsquerschnitte (9', 10') in dem Absperrorgan (3') vorgesehen sind.

5. Vorrichtung nach einem der Ansprüche 1 bis 3, **dadurch gekennzeichnet, daß** die Teilöffnungsquerschnitte (9'', 10'') in dem Ventilgehäuse (2'') bzw. in dem Absperrorgan (3'') vorgesehen sind.

## Revendications

1. Dispositif destiné à limiter la pression d'huile dans le circuit d'huile de lubrification d'un moteur à combustion interne, comprenant une pompe à huile et une soupape de sûreté destinées à dégager une ouverture afin de former une liaison entre le côté de pression et le côté d'aspiration de la pompe à huile ou le côté de pression de la pompe à huile et un carter, laquelle soupape comprend un élément d'obturation mobile en s'opposant à une force de sollicitation dans un logement de soupape afin de dégager l'ouverture, l'ouverture de la soupape de sûreté (1' ; 1'') étant divisée en au moins deux ouvertures partielles (9', 10' ; 9'', 10'') espacées l'une de l'autre dans la direction de déplacement de l'élément d'obturation d'une distance (B), les au moins deux ouvertures partielles étant dégagées à la suite à des pressions d'huile prédéterminées respectives et restant dégagées tant que les pressions d'huile prédéterminées respectives sont dépassées,
**caractérisé en ce que** au moins l'une des ouvertures partielles (9', 10' ; 10'') est disposée dans l'élément d'obturation (3' ; 3'') et **en ce qu'**elle est dégagée en atteignant le bord (13 ; 13'') d'une gorge (12) s'étendant autour de l'intérieur du logement de soupape (2' ; 2'').

2. Dispositif selon la revendication 1, **caractérisé en ce que** les ouvertures partielles sont de tailles différentes, une ouverture principale (10', 10'') étant précédée par une première ouverture plus petite (9', 9''), de sorte qu'à une pression d'huile prédéterminée tout d'abord, la première ouverture est dégagée et à une pression d'huile prédéterminée supérieure, l'ouverture principale est également dégagée.

3. Dispositif selon la revendication 1 ou la revendication 2, **caractérisé en ce que** les ouvertures partielles (9', 10'' ; et 9'', 10'' respectivement) sont de formes différentes.

4. Dispositif selon l'une quelconque des revendications 1 à 3, **caractérisé en ce que** les ouvertures partielles (9', 10') sont disposées dans l'élément d'obturation (3').

5. Dispositif selon l'une quelconque des revendications 1 à 3, **caractérisé en ce que** les ouvertures partielles (9'', 10'') sont formées respectivement dans le logement de soupape (2'') et dans l'élément d'obturation (3'').
